# EUROPÄISCHE PATENTSCHRIFT

(11) **EP 4 342 274 B1**
(45) Veröffentlichungstag und Bekanntmachung des Hinweises auf die Patenterteilung: **10.12.2025**
(21) Anmeldenummer: 22196883.7
(22) Anmeldetag: 21.09.2022
(51) Int. Cl.: A01B 71/06, F16D 3/38

(54) **GELENKWELLE**
SHAFT DRIVE
ARBRE ARTICULÉ

(43) Veröffentlichungstag der Anmeldung: 27.03.2024
(73) Patentinhaber: Walterscheid GmbH, 53797 Lohmar (DE)
(72) Erfinder: HANTSCHACK, Falk, 01067 Dresden (DE); HASTINGS, Jesse, Davis IL, 61019 (US); EVERS, Chris, 01157 Dresden (DE)
(74) Vertreter: Neumann Müller Oberwalleney Patentanwälte PartG mbB

(56) Entgegenhaltungen:
- DE-A1- 10 303 050
- GB-A- 2 405 129
- US-A1- 2014 117 676
- US-A1- 2022 252 438

## Beschreibung

Die Erfindung betrifft eine Gelenkwelle zur Drehmomentübertragung zwischen einer Zapfwelle einer antreibenden landwirtschaftlichen Maschine und einem Antriebszapfen eines anzutreibenden landwirtschaftlichen Geräts, wobei die Gelenkwelle ein erstes Gelenk, ein zweites Gelenk, eine Verbindungswelle und eine Anschlussnabe umfasst. Das erste Gelenk weist ein erstes inneres Gelenkteil und ein erstes äußeres Gelenkteil auf, die schwenkbar und drehmomentübertragend miteinander verbunden sind. Das zweite Gelenk weist ein zweites inneres Gelenkteil und ein zweites äußeres Gelenkteil auf, die ebenfalls schwenkbar und drehmomentübertragend miteinander verbunden sind. Das erste innere Gelenkteil und das zweite innere Gelenkteil sind über die Verbindungswelle drehfest miteinander verbunden. Die Anschlussnabe ist starr mit dem zweiten äußeren Gelenkteil verbunden und weist Verbindungsmittel zum drehfesten Verbinden der Anschlussnabe mit einer Welle auf.

Eine solche Gelenkwelle ist zum Beispiel aus der DE 103 03 050 A1 bekannt, die eine Gelenkwelle zum Antreiben von Arbeitsaggregaten über eine Zapfwelle einer landwirtschaftlichen Maschine zeigt. An der landwirtschaftlichen Maschine, zum Beispiel einem Traktor, ist zwischen der Gelenkwelle und der Zapfwelle eine Generatoreinheit angeordnet, über die ein Generator von der Zapfwelle angetrieben wird, wobei die mechanische Leistung der Zapfwelle über eine Ausgangswelle der Generatoreinheit auf die Gelenkwelle übertragen wird. Somit kann jeder Traktor mit einer Zapfwelle nachträglich umgerüstet bzw. erweitert werden, um beispielsweise ein weiteres Bordnetz mit höherer Spannung bereitstellen zu können.

US 2022/252438 A1 zeigt ebenfalls eine solche Gelenkwelle, die von einem Gelenkwellenschutz umgeben ist. Die Gelenke sind innerhalb von Schutztöpfen des Gelenkwellenschutzes angeordnet. Die mit dem zweiten äußeren Gelenkteil verbundene Anschlussnabe ragt aus dem Schutztopf für das zweite Gelenkt heraus, um außerhalb des Schutztopfes eine abgewinkelte Stellung einnehmen zu können.

Aufgabe der vorliegenden Erfindung ist es, eine kompakte Anordnung zur Erzeugung elektrischer Energie mittels einer Gelenkwelle bereitzustellen.

Die Aufgabe wird erfindungsgemäß durch eine Gelenkwelle zur Drehmomentübertragung zwischen einer Zapfwelle einer antreibenden landwirtschaftlichen Maschine und einem Antriebszapfen eines anzutreibenden landwirtschaftlichen Geräts mit den Merkmalen des Anspruchs 1 gelöst.

Die Integration des Generators in die Gelenkwelle führt zu einer kompakten Anordnung mit geringem Bauraum. Ferner unterbricht der Generator nicht die mechanische Kraft- und Drehmomentübertragung der Gelenkwelle.

Zur Erzielung einer möglichst hohen Drehzahl des Rotors ist der Rotor über ein Getriebe mit der Anschlussnabe antriebsverbunden.

Das Getriebe kann als Planetengetriebe ausgebildet sein. Hierbei kann ein Hohlrad des Planetengetriebes mit dem Gehäuse, ein Sonnenrad des Planetengetriebes mit dem Rotor und ein Planetenträger des Planetengetriebes mit der Anschlussnabe drehfest verbunden sein, wobei der Planetenträger Planetenräder trägt, die jeweils mit dem Hohlrad und dem Sonnenrad in Verzahnungseingriff stehen. Somit wird die Drehzahl der Anschlussnabe zum Sonnenrad, das mit dem Rotor antriebsverbunden, zum Beispiel drehfest verbunden ist, erhöht.

**In** einer Ausgestaltung weist das Gehäuse zumindest eine Drehmomentstütze auf, über die das Gehäuse gegen ein gegenüber der Anschlussnabe stehendes Bauteil, zum Beispiel einer landwirtschaftlichen Maschine oder einem landwirtschaftlichen Gerät, drehfest abstützbar ist.

**In** dem Gehäuse kann eine Leistungselektronik zum Umformen und Steuern der vom Generator erzeugten elektrischen Energie aufgenommen sein. Hierdurch ergibt sich ein sehr kompakter Aufbau der Gelenkwelle einschließlich Generator und Leistungselektronik.

Darüber hinaus kann an dem Gehäuse eine Steckverbinderaufnahme für das Anschließen eines elektrischen Kabels angeordnet sein.

Die kompakte Bauweise der Gelenkwelle kann dadurch ergänzt werden, dass der Generator und/oder die Leistungselektronik über das Gehäuse luftgekühlt ist.

In einer Ausgestaltung ist das erste Gelenk als Kreuzgelenk mit einer ersten äußeren Gelenkgabel als erstes äußeres Gelenkteil und einer über zumindest ein Zapfenkreuz mit dieser verbundenen ersten inneren Gelenkgabel als erstes inneres Gelenkteil ausgebildet.

Darüber hinaus kann das zweite Gelenk als Kreuzgelenk mit einer zweiten äußeren Gelenkgabel als zweites äußeres Gelenkteil und einer über zumindest ein Zapfenkreuz mit dieser verbundenen zweiten inneren Gelenkgabel als zweites inneres Gelenkteil ausgebildet sein.

Grundsätzlich sind auch andere Arten von Gelenken, wie zum Beispiel Gleichlaufgelenk, denkbar.

Die Verbindungswelle kann zumindest ein erstes Teleskopelement und ein zweites Teleskopelement aufweisen, die axial verschiebbar und drehmomentübertragend miteinander verbunden sind. Grundsätzlich sind jedoch auch mehr als zwei Teleskopelemente denkbar.

Darüber hinaus kann die Gelenkwelle einen Gelenkwellenschutz aufweisen, in dem das erste Gelenk, das zweite Gelenk und die Verbindungswelle drehbar aufgenommen sind, wobei der Gelenkwellenschutz drehfest mit dem Gehäuse verbunden ist bzw. das Gehäuse bildet.

Eine beispielhafte Ausführungsform der erfindungsgemäßen Gelenkwelle wird im Folgenden anhand der Zeichnungen näher erläutert.
- Figur 1: zeigt einen Traktor mit einem daran angehängten Gerät, das über eine mit einer Schutzvorrichtung versehenen, erfindungsgemäßen Gelenkwelle angetrieben ist,
- Figur 2: zeigt eine perspektivische Darstellung der Gelenkwelle gemäß Figur 1,
- Figur 3: zeigt einen Längsschnitt der Gelenkwelle gemäß Figur 1 und
- Figur 4: zeigt eine vergrößerte Darstellung des Längsschnitts gemäß Figur 3 im Bereich des Generators.

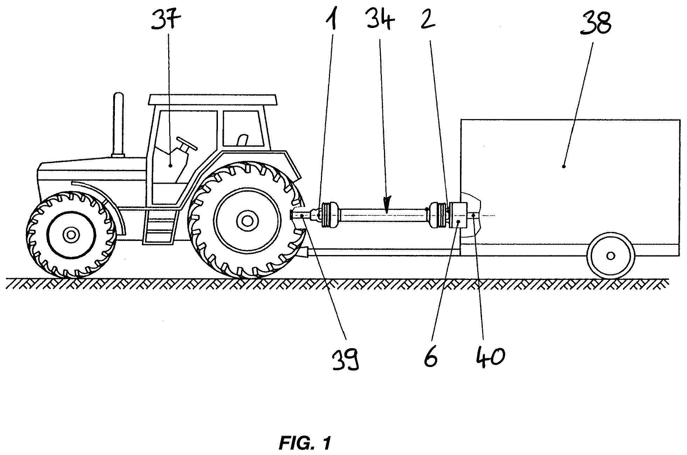

Aus Figur 1 ist eine landwirtschaftliche Maschine, hier ein Traktor 37, mit einem angehängten und vom Traktor 37 angetriebenen landwirtschaftlichen Gerät 38 ersichtlich. Das Gerät 2 wird mittels einer Gelenkwelle 34 von einer Zapfwelle 39 des Traktors 37 angetrieben. Hierzu ist ein erstes Gelenk 1 der Gelenkwelle 34 auf die Zapfwelle 39 aufgesteckt. Ein an einem anderen Ende angebrachtes zweites Gelenk 2 ist antriebsmäßig mit einem Antriebszapfen 40 des landwirtschaftlichen Geräts 38 verbunden. Zur Erzeugung elektrischer Energie durch die Rotation der Gelenkwelle 34 weist die Gelenkwelle 34 einen Generator 6 auf.

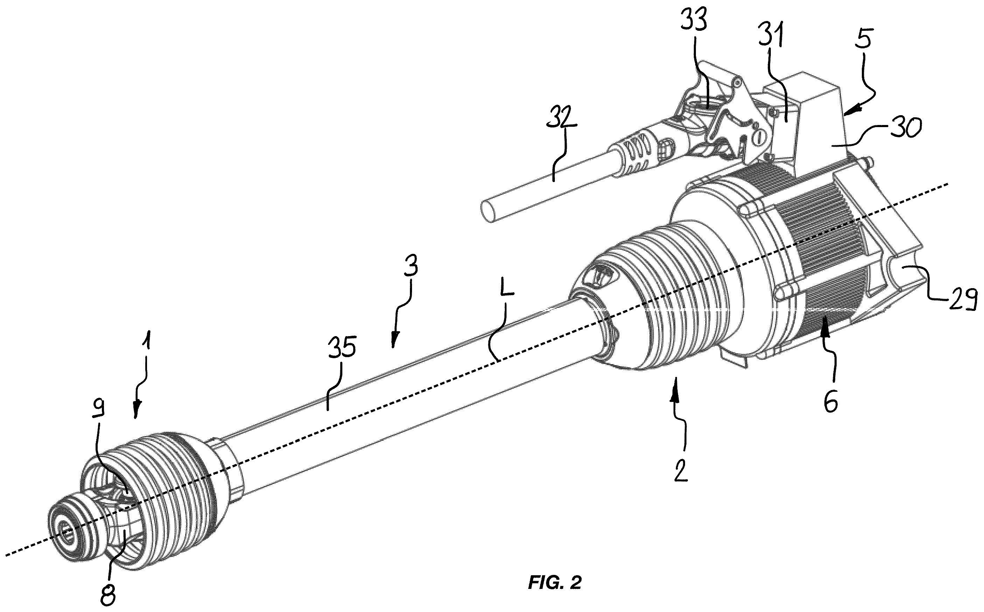

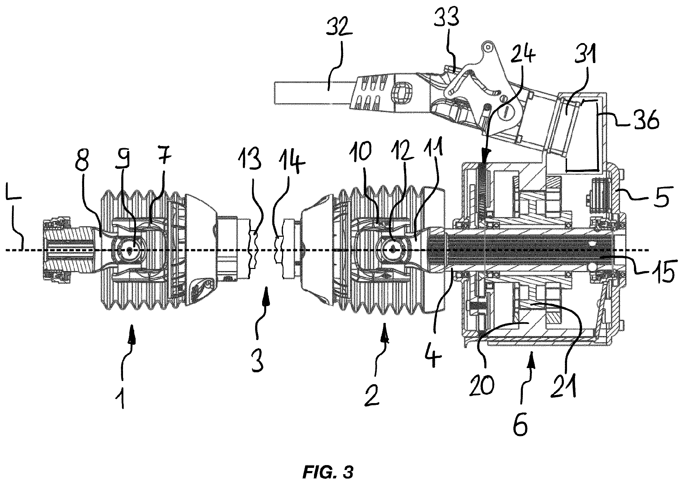

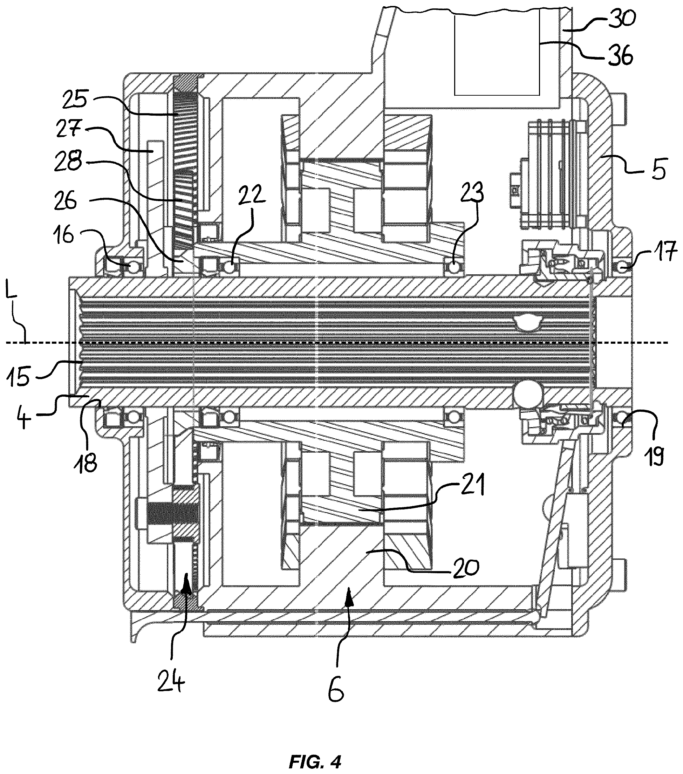

Die Figuren 2 bis 4 zeigen die erfindungsgemäße Gelenkwelle 34 gemäß Figur 1 in verschiedenen Darstellungen und werden im Folgenden zusammen beschrieben.

Die Gelenkwelle 34 umfasst das erste Gelenk 1 und das zweite Gelenk 2, die über eine Verbindungswelle 3 miteinander verbunden sind. Die Gelenkwelle 34 umfasst darüber hinaus eine Anschlussnabe 4, die in einem Gehäuse 5 aufgenommen ist. In dem Gehäuse 5 ist ferner der Generator 6 aufgenommen.

Das erste Gelenk 1 weist ein erstes inneres Gelenkteil 7 in Form einer Gelenkgabel und ein erstes äußeres Gelenkteil 8 in Form einer Gelenkgabel auf, die über ein Zapfenkreuz 9 schwenkbar und drehmomentübertragend miteinander verbunden sind.

Das zweite Gelenk 2 weist ein zweites inneres Gelenkteil 10 in Form einer Gelenkgabel und ein zweites äußeres Gelenkteil 11 in Form einer Gelenkgabel auf, die über ein Zapfenkreuz 12 schwenkbar und drehmomentübertragend miteinander verbunden sind.

Grundsätzlich können das erste Gelenk 1 und/oder das zweite Gelenk 2 anders ausgebildet sein, solange sie schwenkbar und drehmomentübertragend ausgebildet sind, wie zum Beispiel als Gleichlaufgelenk.

Das erste innere Gelenkteil 7 und das zweite innere Gelenkteil 10 sind mittels der Verbindungswelle 3 drehfest bzw. drehmomentübertragend miteinander verbunden. Im vorliegenden Ausführungsbeispiel ist die Verbindungswelle 3 als Teleskopwelle mit einem ersten Teleskopelement 13 und einem zweiten Teleskopelement 14 ausgebildet, die axial verschiebbar und drehmomentübertragend miteinander verbunden sind.

Die Verbindungswelle 3 kann grundsätzlich auch starr oder aus mehr als zwei Teleskopelementen zusammengesetzt sein.

Die Anschlussnabe 4 ist drehfest mit dem zweiten äußeren Gelenkteil 11 verbunden und ist als Hohlwelle mit Verbindungsmittel 15 in Form einer inneren Keilverzahnung ausgebildet, mit der die Anschlussnabe 4 auf den Anschlusszapfen 40 mit äußerer Keilverzahnung aufgeschoben werden kann.

Die Anschlussnabe 4 ist über Wälzlager 16, 17 in dem Gehäuse 5 gelagert. Grundsätzlich können auch andere Drehlager, wie zum Beispiel Gleitlager, zum Einsatz kommen. Die Anschlussnabe 4 ist durch das gesamte Gehäuse 5 hindurchgeführt und ragt aus einer ersten Öffnung 18 dem zweiten Gelenk 2 zugewandt aus dem Gehäuse 5 vor. Auf einer der ersten Öffnung 18 abgewandten Seite ist die Anschlussnabe 4 durch eine zweite Öffnung 19 des Gehäuses 5 zugänglich und kann auf die Welle, beispielsweise eine Zapfwelle, aufgeschoben werden.

In dem Gehäuse 5 befindet sich ein Stator 20 des Generators 6, wobei der Stator 20 starr, d. h. drehfest, in dem Gehäuse 5 mit diesem verbunden ist. Der Stator 20 ist hierbei koaxial zu einer Längsachse L der Anschlussnabe 4 angeordnet. Ferner ist ein Rotor 21 des Generators 6 in dem Gehäuse 5 drehbar angeordnet, wobei der Rotor 21 koaxial zum Stator 20 angeordnet ist. In der gezeigten Ausführungsform ist der Rotor 21 über Wälzlager 22, 23 auf der Anschlussnabe 4 gelagert. Anstelle der Wälzlager 22, 23 können auch andere Drehlager, wie zum Beispiel Gleitlager eingesetzt werden. Darüber hinaus kann der Rotor 21 auch direkt im Gehäuse 5 gelagert sein.

Der Rotor 21 ist zudem mit der Anschlussnabe 4 antriebsverbunden. Im vorliegenden Ausführungsbeispiel ist der Rotor 21 über ein Planetengetriebe 24 mit der Anschlussnabe 4 antriebsverbunden. Grundsätzlich kommt jede andere Getriebeart infrage, mit der die Drehzahl der Anschlussnabe 4 ins Schnellere übersetzt werden kann.

Im vorliegenden Fall, in dem das Getriebe als Planetengetriebe 24 ausgebildet ist, ist in dem gezeigten Ausführungsbeispiel ein Hohlrad 25 des Planetengetriebes 24 in dem Gehäuse 5 mit diesem drehfest verbunden. Ein Sonnenrad 26 des Planetengetriebes 24 ist mit dem Rotor 21 drehfest verbunden. Ein Planetenträger 27 des Planetengetriebes 24 trägt mehrere, gegenüber dem Planetenträger 27 drehbare Planetenräder 28, die jeweils einerseits mit einer Verzahnung des Hohlrads 25 und andererseits mit einer Verzahnung des Sonnenrads 26 in Verzahnungseingriff stehen.

Damit bei angetriebener Anschlussnabe 4 das Gehäuse 5 nicht mitdreht, weist das Gehäuse 5 eine Drehmomentstütze 29 in Form einer konkaven Ausnehmung auf, die gegen einen feststehenden und ortsfesten, entsprechend geformten Vorsprung oder Zapfen in Richtung um die Längsachse L abgestützt werden kann. Dieser Vorsprung oder Zapfen ist zum Beispiel an einer landwirtschaftlichen Maschine oder einem landwirtschaftlichen Gerät angeordnet.

Das Gehäuse 5 weist einen Gehäuseabschnitt 30 auf, in dem eine Leistungselektronik 36 (hier schematisch dargestellt) zum Umformen und Steuern der vom Generator 6 erzeugten elektrischen Energie aufgenommen ist. Darüber hinaus ist an dem Gehäuse 5 eine Steckverbinderaufnahme 31 angeordnet, um die Leistungselektronik 36 mit einem Bordnetz zu verbinden. Hierzu kann, wie dargestellt, ein elektrisches Kabel 32 mit Steckverbinder 33 vorgesehen sein.

Die Gelenkwelle 34 weist ferner einen Gelenkwellenschutz 35 auf, in dem die drehenden Bauteile der Gelenkwelle 34, die nicht in dem Gehäuse 5 angeordnet sind, aufgenommen sind, wobei der Gelenkwellenschutz 35 drehfest mit dem Gehäuse 5 gekoppelt ist.

### Bezugszeichenliste

- 1: erstes Gelenk
- 2: zweites Gelenk
- 3: Verbindungswelle
- 4: Anschlussnabe
- 5: Gehäuse
- 6: Generator
- 7: erstes inneres Gelenkteil
- 8: erstes äußeres Gelenkteil
- 9: Zapfenkreuz
- 10: zweites inneres Gelenkteil
- 11: zweites äußeres Gelenkteil
- 12: Zapfenkreuz
- 13: erstes Teleskopelement
- 14: zweites Teleskopelement
- 15: Verbindungsmittel
- 16: Wälzlager
- 17: Wälzlager
- 18: erste Öffnung
- 19: zweite Öffnung
- 20: Stator
- 21: Rotor
- 22: Wälzlager
- 23: Wälzlager
- 24: Planetengetriebe
- 25: Hohlrad
- 26: Sonnenrad
- 27: Planetenträger
- 28: Planetenrad
- 29: Drehmomentstütze
- 30: Gehäuseabschnitt
- 31: Steckverbinderaufnahme
- 32: Kabel
- 33: Steckverbinder
- 34: Gelenkwelle
- 35: Gelenkwellenschutz
- 36: Leistungselektronik
- 37: Traktor
- 38: Gerät
- 39: Zapfwelle
- 40: Antriebszapfen

- L: Längsachse

## Patentansprüche

1. Gelenkwelle (34) zur Drehmomentübertragung zwischen einer Zapfwelle einer antreibenden landwirtschaftlichen Maschine und einem Antriebszapfen eines anzutreibenden landwirtschaftlichen Geräts, wobei die Gelenkwelle (34) Folgendes umfasst:
ein erstes Gelenk (1) mit einem ersten inneren Gelenkteil (7) und einem ersten äußeren Gelenkteil (8), die schwenkbar und drehmomentübertragend miteinander verbunden sind,
ein zweites Gelenk (2), mit einem zweiten inneren Gelenkteil (10) und einem zweiten äußeren Gelenkteil (11), die schwenkbar und drehmomentübertragend miteinander verbunden sind,
eine Verbindungswelle (3), über die das erste innere Gelenkteil (7) und das zweite innere Gelenkteil (10) drehfest miteinander verbunden sind, und
eine Anschlussnabe (4), die starr mit dem zweiten äußeren Gelenkteil (11) verbunden ist und Verbindungsmittel (15) zum drehfesten Verbinden der Anschlussnabe (4) mit einer Welle aufweist,
ein Gehäuse (5), in dem die Anschlussnabe (4) aufgenommen und drehbar gelagert ist, und
einen Generator (6), der in dem Gehäuse (5) aufgenommen ist, wobei der Generator (6) einen Stator (20), der mit dem Gehäuse (5) starr verbunden und koaxial zur Anschlussnabe (4) angeordnet ist, und einen Rotor (21), der gegenüber dem Gehäuse (5) drehbar gelagert und über ein Getriebe (24) mit der Anschlussnabe (4) antriebsverbunden ist, aufweist.

2. Gelenkwelle (34) nach Anspruch 1,
**dadurch gekennzeichnet,**
**dass** das Getriebe ein Planetengetriebe (24) ist.

3. Gelenkwelle (34) nach Anspruch 2,
**dadurch gekennzeichnet,**
**dass** ein Hohlrad (25) des Planetengetriebes (24) mit dem Gehäuse (5) drehfest verbunden ist,
**dass** ein Sonnenrad (26) des Planetengetriebes (24) mit dem Rotor (21) drehfest verbunden ist, und
**dass** ein Planetenträger (27) Planetenräder (28) trägt, die mit dem Hohlrad (25) und dem Sonnenrad (26) in Verzahnungseingriff stehen, wobei der Planetenträger (27) mit der Anschlussnabe (4) antriebsverbunden ist.

4. Gelenkwelle (34) nach einem der Ansprüche 1 bis 3,
**dadurch gekennzeichnet,**
**dass** das Gehäuse (5) zumindest eine Drehmomentstütze (29) aufweist, über die das Gehäuse (5) gegen ein gegenüber der Anschlussnabe (4) stehendes Bauteil drehfest abstützbar ist.

5. Gelenkwelle (34) nach einem der Ansprüche 1 bis 4,
**dadurch gekennzeichnet,**
**dass** in dem Gehäuse (5) eine Leistungselektronik (36) zum Umformen und Steuern der vom Generator (6) erzeugten elektrischen Energie aufgenommen ist.

6. Gelenkwelle (34) nach Anspruch 5,
**dadurch gekennzeichnet,**
**dass** die Leistungselektronik (36) über das Gehäuse (5) luftgekühlt ist.

7. Gelenkwelle (34) nach einem der Ansprüche 1 bis 6,
**dadurch gekennzeichnet,**
**dass** der Generator (6) über das Gehäuse (5) luftgekühlt ist.

8. Gelenkwelle (34) nach einem der Ansprüche 1 bis 7,
**dadurch gekennzeichnet,**
**dass** in dem Gehäuse (5) eine Steckverbinderaufnahme (31) für das Anschließen eines elektrischen Kabels (32) angeordnet ist.

9. Gelenkwelle (34) nach einem der Ansprüche 1 bis 8,
**dadurch gekennzeichnet,**
**dass** das erste Gelenk (1) als Kreuzgelenk mit einer ersten äußeren Gelenkgabel als erstes äußeres Gelenkteil (8) und einer über zumindest ein Zapfenkreuz (9) mit dieser verbundenen ersten inneren Gelenkgabel als erstes inneres Gelenkteil (7) ausgebildet ist.

10. Gelenkwelle (34) nach einem der Ansprüche 1 bis 9,
**dadurch gekennzeichnet,**
**dass** das zweite Gelenk (2) als Kreuzgelenk mit einer zweiten äußeren Gelenkgabel als zweites äußeres Gelenkteil (11) und einer über zumindest ein Zapfenkreuz (12) mit dieser verbundenen zweiten inneren Gelenkgabel als zweites inneres Gelenkteil (10) ausgebildet ist.

11. Gelenkwelle (34) nach einem der Ansprüche 1 bis 10,
**dadurch gekennzeichnet,**
**dass** die Verbindungswelle (3) zumindest ein erstes Teleskopelement (13) und ein zweites Teleskopelement (14) aufweist, die axial verschiebbar und drehmomentübertragend miteinander verbunden sind.

12. Gelenkwelle (34) nach einem der Ansprüche 1 bis 11,
**dadurch gekennzeichnet,**
**dass** die Gelenkwelle (34) einen Gelenkwellenschutz (35) aufweist, in dem das erste Gelenk (1), das zweite Gelenk (2) und die Verbindungswelle (3) drehbar aufgenommen sind, und
**dass** der Gelenkwellenschutz (35) drehfest mit dem Gehäuse (5) verbunden ist.

## Claims

1. Universal joint shaft (34) for transmitting torque between a power take-off shaft of a driving agricultural machine and a drive journal of an agricultural implement to be driven, the universal joint shaft (34) comprising:
a first joint (1) with a first inner joint member (7) and a first outer joint member (8), which are pivotably and torque-transmittingly connected to each other,
a second joint (2), with a second inner joint member (10) and a second outer joint member (11), which are pivotably and torque-transmittingly connected to each other,
a connecting shaft (3), via which the first inner joint member (7) and the second inner joint member (10) are connected to each other in a rotationally fixed manner, and
a connecting hub (4) which is rigidly connected to the first outer joint member (11) and has connecting means (15) for connecting the connecting hub (4) to a shaft in a rotationally fixed manner,
a housing (5) in which the connecting hub (4) is accommodated and rotatably mounted, and
a generator (6), which is accommodated in the housing (5), the generator (6) having a stator (20), which is rigidly connected to the housing (5) and is arranged coaxially to the connecting hub (4), and a rotor (21), which is mounted rotatably with respect to the housing (5) and is drive-connected to the connecting hub (4) via a transmission (24).

2. Universal joint shaft (34) according to claim 1,
**characterized in**
**that** the transmission is a planetary gear (24).

3. Universal joint shaft (34) according to claim 2,
**characterized in**
**that** a ring gear (25) of the planetary gear (24) is connected to the housing (5) in a rotationally fixed manner,
**that** a sun gear (26) of the planetary gear (24) is connected to the rotor (21) in a rotationally fixed manner, and
**that** a planet carrier (27) carries planet gears (28) which are in toothed engagement with the ring gear (25) and the sun gear (26), the planet carrier (27) being drivingly connected to the connecting hub (4).

4. Universal joint shaft (34) according to one of claims 1 to 3,
**characterized in**
**that** the housing (5) has at least one torque support (29), via which the housing (5) can be supported in a rotationally fixed manner against a component stationary relative to the connecting hub (4).

5. Universal joint shaft (34) according to one of claims 1 to 4,
**characterized in**
**that** power electronics (36) for converting and controlling the electrical energy generated by the generator (6) are accommodated in the housing (5).

6. Universal joint shaft (34) according to claim 5,
**characterized in**
**that** the power electronics (36) are air-cooled via the housing (5).

7. Universal joint shaft (34) according to one of claims 1 to 6,
**characterized in**
**that** the generator (6) is air-cooled via the housing (5).

8. Universal joint shaft (34) according to one of claims 1 to 7,
**characterized in**
**that** a connector receptacle (31) for connecting an electrical cable (32) is arranged in the housing (5).

9. Universal joint shaft (34) according to one of claims 1 to 8,
**characterized in**
**that** the first joint (1) is designed as a cardan joint having a first outer joint yoke as said first outer joint member (8) and a first inner joint yoke as said first inner joint member (7) connected to said first outer joint yoke by means of at least one journal cross (9).

10. Universal joint shaft (34) according to one of claims 1 to 9,
**characterized in**
**that** the second joint (2) is designed as a cardan joint having a second outer joint yoke as said second outer joint member (11) and a second inner joint yoke as said second inner joint member (10) connected to said second outer joint yoke by means of at least one journal cross (12).

11. Universal joint shaft (34) according to one of claims 1 to 10,
**characterized in**
**that** the connecting shaft (3) has at least a first telescopic element (13) and a second telescopic element (14) which are connected to one another in an axially displaceable and torque-transmitting manner.

12. Universal joint shaft (34) according to one of claims 1 to 11,
**characterized in**
**that** the universal joint shaft (34) has a universal joint shaft guard (35) in which the first joint (1), the second joint (2) and the connecting shaft (3) are rotatably accommodated, and
**that** the universal joint shaft guard (35) is coupled to the housing (5) in a rotationally fixed manner.

## Revendications

1. Arbre à cardan (34), destiné à transmettre un couple de rotation entre une prise de force d'une machine agricole assurant un entrainement et un tourillon d'entraînement d'un engin agricole qui doit être entraîné, l'arbre à cardan (34) comprenant ce qui suit :
une première articulation (1), pourvue d'une première pièce d'articulation (7) interne et d'une première pièce d'articulation (8) externe, qui sont reliées l'une avec l'autre de manière à pouvoir pivoter et à transmettre un couple de rotation,
une deuxième articulation (2), pourvue d'une deuxième pièce d'articulation (10) interne et d'une deuxième pièce d'articulation (11) externe, qui sont reliées l'une avec l'autre de manière à pouvoir pivoter et à transmettre un couple de rotation,
un arbre de liaison (3), par l'intermédiaire duquel la première pièce d'articulation (7) interne et la deuxième pièce d'articulation (10) interne sont reliées l'une avec l'autre, de manière solidaire en rotation,
un moyeu de raccordement (4), qui est relié de manière rigide avec la deuxième pièce d'articulation (11) externe et qui comporte des moyens de liaison (15), destinés à assurer la liaison solidaire en rotation du moyeu de raccordement (4) avec un arbre,
un carter (5), dans lequel le moyeu de raccordement (4) est réceptionné et
un générateur (6) qui est logé dans le carter (5), le générateur (6) comportant un stator (20), qui est relié de manière rigide avec le carter (5) et qui est placé de manière coaxiale par rapport au moyeu de raccordement (4) et un rotor (21), qui est logé de manière rotative au regard du carter (5) et qui par l'intermédiaire d'une transmission (24) est relié en entraînement avec le moyeu de raccordement (4).

2. Arbre à cardan (34) selon la revendication 1,
**caractérisé**
**en ce que** la transmission est un engrenage planétaire (24).

3. Arbre à cardan (34) selon la revendication 2,
**caractérisé**
**en ce qu'**une couronne de train planétaire (25) de l'engrenage planétaire (24) est reliée de manière solidaire en rotation avec le carter (5),
**en ce qu'**un pignon solaire (26) de l'engrenage planétaire (24) est relié de manière solidaire en rotation avec le rotor (21) et
**en ce qu'**un porte-satellites (27) porte des roues planétaires (28), qui se trouvent en engrènement denté avec la couronne de train planétaire (25) et avec le pignon solaire (26), le porte-satellites (27) étant relié en entraînement avec le moyeu de raccordement (4).

4. Arbre à cardan (34) selon l'une quelconque des revendications 1 à 3,
**caractérisé**
**en ce que** le carter (5) comporte au moins un support de couple (29), par l'intermédiaire duquel le carter (5) peut être supporté à l'encontre d'un composant se trouvant au vis-à-vis du moyeu de raccordement (4).

5. Arbre à cardan (34) selon l'une quelconque des revendications 1 à 4,
**caractérisé**
**en ce que** dans le carter (5) est réceptionnée une électronique de puissance (36), destinée à convertir et à commander l'énergie électrique créée par le générateur (6).

6. Arbre à cardan (34) selon la revendication 5,
**caractérisé**
**en ce que** l'électronique de puissance (36) est refroidie par air par l'intermédiaire du carter (5).

7. Arbre à cardan (34) selon l'une quelconque des revendications 1 à 6,
**caractérisé**
**en ce que** le générateur (6) est refroidi par air par l'intermédiaire du carter (5).

8. Arbre à cardan (34) selon l'une quelconque des revendications 1 à 7,
**caractérisé**
**en ce que** dans le carter (5) est placée une alvéole de connecteur (31), destinée au raccordement d'un câble (32) électrique.

9. Arbre à cardan (34) selon l'une quelconque des revendications 1 à 8,
**caractérisé**
**en ce que** la première articulation (1) est conçue sous la forme d'un joint universel, pourvu d'une première fourche de joint externe en tant que première pièce d'articulation (8) externe et d'une première fourche de joint interne en tant que première pièce d'articulation (7) interne, reliée avec celle-ci par l'intermédiaire d'au moins un croisillon de cardan (9).

10. Arbre à cardan (34) selon l'une quelconque des revendications 1 à 9,
**caractérisé**
**en ce que** la deuxième articulation (2) est conçue sous la forme d'un joint universel, pourvu d'une deuxième fourche de joint externe en tant que deuxième pièce d'articulation (11) externe et d'une deuxième fourche de joint interne en tant que deuxième pièce d'articulation (10) interne, reliée avec celle-ci par l'intermédiaire d'au moins un croisillon de cardan (12).

11. Arbre à cardan (34) selon l'une quelconque des revendications 1 à 10,
**caractérisé**
**en ce que** l'arbre de liaison (3) comporte au moins un premier élément télescopique (13) et un deuxième élément télescopique (14), qui sont reliés l'un avec l'autre en étant déplaçables en direction axiale et de manière à transmettre un couple de rotation.

12. Arbre à cardan (34) selon l'une quelconque des revendications 1 à 11,
**caractérisé**
**en ce que** l'arbre à cardan (34) comporte une protection (35) d'arbre à cardan, dans laquelle la première articulation (1), la deuxième articulation (2) et l'arbre de liaison (3) sont réceptionnés de manière rotative et
**en ce que** la protection (35) d'arbre à cardan est reliée de manière solidaire en rotation avec le carter (5).
